# EUROPEAN PATENT SPECIFICATION

(11) **EP 3 231 742 B1**
(45) Date of publication and mention of the grant of the patent: **12.09.2018**
(21) Application number: 17165934.5
(22) Date of filing: 11.04.2017
(51) Int. Cl.: B65G 19/02, B65G 47/64, B65G 57/32

(54) **DEVICE AND METHOD FOR STACKING ARTICLES**
VORRICHTUNG UND VERFAHREN ZUR STAPELUNG VON ARTIKELN
DISPOSITIF ET PROCÉDÉ POUR EMPILER DES ARTICLES

(30) Priority: 12.04.2016 IT UA20162507
(43) Date of publication of application: 18.10.2017
(73) Proprietor: CT Pack S.R.L., 40056 Crespellano (Bologna) (IT)
(72) Inventor: DAVI, Daniele, 44123 FERRARA (IT); ROSIGNOLI, David, 44123 PONTEGRADELLA (FERRARA) (IT); QUERZOLI, Andrea, 44123 FERRARA (IT)
(74) Representative: Milli, Simone

(56) References cited:
- EP-A1- 0 260 363
- EP-A1- 1 046 582
- EP-A1- 1 992 562
- WO-A2-2007/144921

## Description

This invention relates to a device and a method for stacking articles. Various stacking devices are known which comprise a line for feeding food items (usually of the biscuit type), usually of the type with cleats, and a pair of planes located at different heights. Document WO 2007 144921 A discloses a device for stacking articles according to the preamble of claim 1. Problems are encountered with these stacking devices when the infeed rates of the products are particularly, wherein the chute must be moved at a particularly high speed: under these conditions, in particular in the step of moving of the chute downwards, a detachment of the article from the chute is often found which may cause malfunctions of the machine and incorrect stacking.

The aim of this invention is to overcome the above-mentioned drawbacks of the prior art.

More specifically, the aim of this invention is to provide a device for stacking and a method for stacking food items which can operate at particularly high infeed rates.

A further aim of this invention is to provide a device for stacking and a method for stacking which are particularly simple and reliable.

According to the invention, these aims are achieved by a device and by a method for stacking according to this invention which comprises the technical features set out in one or more of the appended claims.

The technical features of the invention, with reference to the above aims, are clearly described in the annexed claims and its advantages are more apparent from the detailed description which follows, with reference to the accompanying drawings which illustrate a non-limiting embodiment of the invention and in which:
- Figure 1 is a side view of a first embodiment of the stacking device according to this invention;
- Figure 2 is a scaled-up view of a detail of Figure 1;
- Figure 3 is a schematic view of a method of actuating the stacking device of Figures 1 and 2;
- Figure 4 is a side view of a second embodiment of the stacking device according to this invention;
- Figure 5 is a schematic view of a method of actuating the embodiment of the stacking device of Figure 4.

With reference to the accompanying drawings, the numeral 1 denotes a device for stacking articles (preferably food items).

The device for stacking articles comprises:
- a feeding conveyor 2 equipped with a plurality of contact elements (3A, 3B, 3C), each designed to make contact with a single article A in order to convey it along a conveying path PC;
   a first transport surface 4, configured to support the articles A along a first portion PC1 of the conveying path PC;
- a predetermined number of conveying planes (P1, P2, P3) for supporting the articles A along a second portion PC2 of the conveying path which follows the first portion PC1 of the conveying path, comprising at least:
   - a first conveying plane P1 positioned at a first height;
   - a second conveying plane P2 positioned at a second height, which is different from and higher than the first height;
- a movable surface 5 for directing articles A, which is movable at least between a number of positions equal to the predetermined number of conveying planes (P1, P2, P3), to selectively and alternatively connect the first transport surface 4 with one of the conveying planes (P1, P2, P3).

It should be noted that a first portion 3B, 3C of the contact elements (3A, 3B, 3C) is movable between an operating position of making contact with and transporting the articles A, and a non-operating position of disengagement from the articles A adopted at the second portion of the conveying path.

On the other hand, a second portion (3B, 3C) of the contact elements is configured to make contact with and push the contact elements (3A, 3B, 3C) along the above-mentioned first and second portions (P1, P2) of the conveying path.

Preferably, the contact elements comprise cleats.

According to another aspect, the second portion of the contact elements 3A comprises contact elements spaced from each other by a number of contact elements (3A, 3B, 3C) equal to the predetermined number of conveying planes (P1, P2, P3).

In other words, if the number of contact planes is two, the second portion comprises contact elements on every other one, along the conveying direction; vice versa if the number of contact planes is three, the second portion comprises a contact element on every other three, along the conveying direction.

According to another aspect, the device comprises a drive and control unit 6 and an actuator designed to move the movable surface 5 for directing articles A and connected to the drive and control unit 6 to be controlled by it.

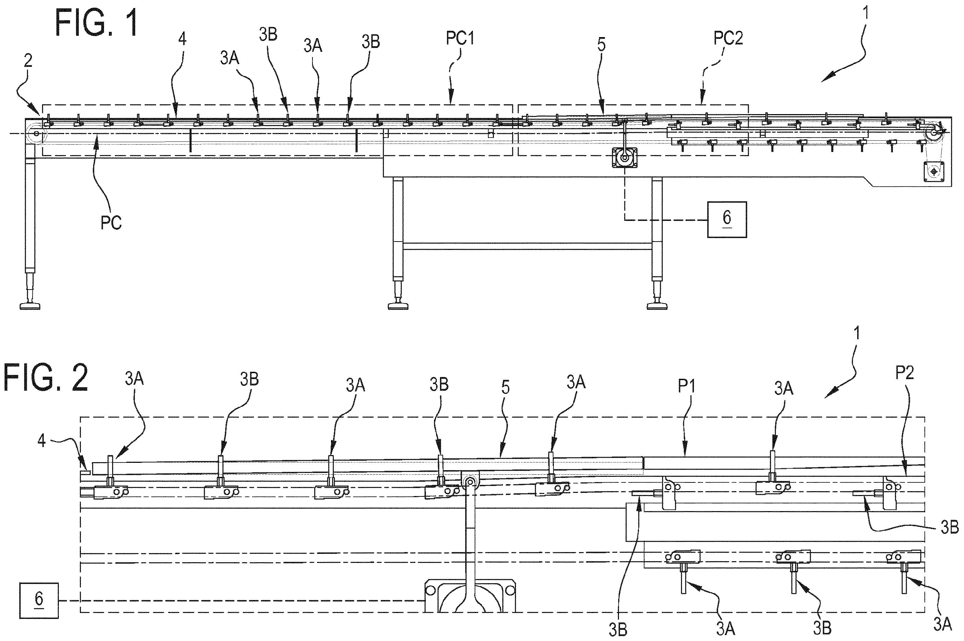

According to a first operating method, illustrated in Figure 2, the drive and control unit 6 is configured to move the movable surface 5 for directing articles A from one conveying plane to another in phase relationship with the feeding conveyor 2, so as to allow feeding a pair of articles A at each feeding plane P1, P2.

As illustrated in Figure 2, according to this method of operation, the movable surface 5 is positioned in a position in which it connects the first surface 4 with the first conveying plane P1, and transfers a first and a second article (each pushed by a respective contact element), using the movable surface 5, to the first conveying plane P1.

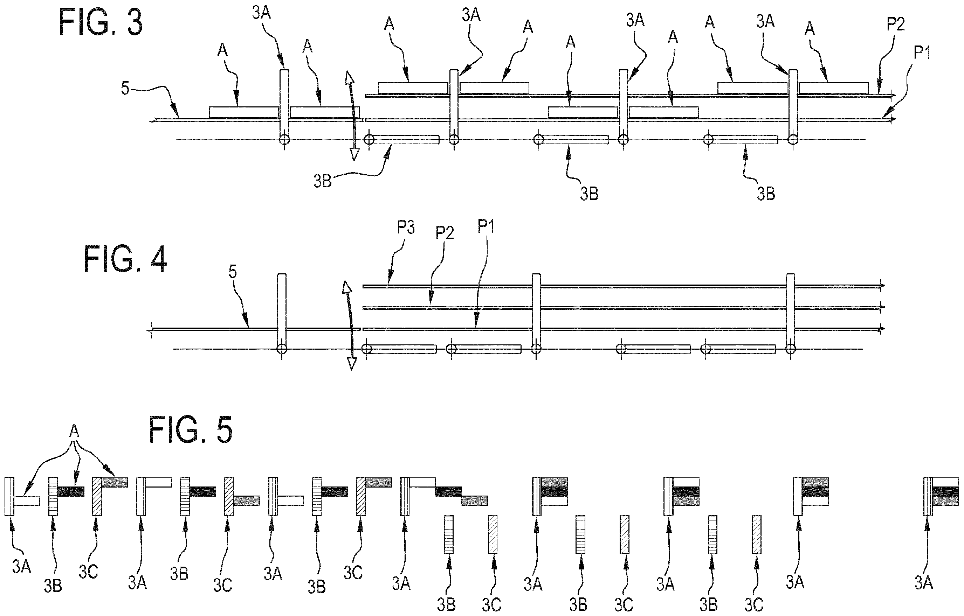

It should be noted that, according to this method, as illustrated in Figure 3, the first article is pushed by a first contact element, whilst the second article is pushed by a second contact element (after the first).

The second contact element is moved from the operating position to the non-operating position, so as to release the contact with the second article.

It should be noted that, according to this operating method, the movable surface is positioned in a second position connecting the first surface 4 with the second conveying plane P2.

In this condition, a third and a fourth article (each pushed by a respective contact element) is transferred, using the movable surface 5, to the second conveying plane P2.

It should be noted that - with reference to the conveying direction - the third article is next relative to the second article, in the same way as the fourth article is next relative to the third article.

It should be noted that, according to this method, as illustrated in Figure 3, the third article is pushed by a third contact element (after the second contact element), whilst the fourth article is pushed by a fourth contact element (after the third contact element).

The fourth contact element is moved from the operating position to the non-operating position, so as to release the contact with the fourth article. It should be noted, on the other hand, that the third contact element pushes the third article, positioned on the second plane P2, and the second article, positioned on the first plane P1. In this way, the third article and the second article are arranged, along the conveying direction, substantially aligned but at different heights.

The stacking by gravity of the article positioned on the second plane P2 on that of the first plane should also be noted, an event originating substantially at the end of the second plane P2.

Figure 2 illustrated the above-mentioned operating method.

It should be noted that the operating method can be performed with a device 1 for stacking articles provided with any number of conveying planes P: in this case, in effect, only two of the conveying planes P will be used (preferably adjacent to each other in height).

According to another aspect, the conveying planes (P1, P2, P3) further comprise a third conveying plane P3 positioned at a third height, which is different from and higher than the first height and second height.

According to this aspect, the movable surface 5 for directing articles A is movable at least between:
- a first connecting position, wherein it connects the first transport surface 4 to the first conveying plane P1,
- a second connecting position, wherein it connects the first transport surface 4 to the second conveying plane P2,
- a third connecting position, wherein it connects the first transport surface 4 to the third conveying plane P3.

It should be noted that, preferably, the device 1 comprises a drive and control unit 6 and an actuator designed to move the movable surface 5 for directing articles A and connected to the drive and control unit 6 to be controlled by it, the drive and control unit 6 being configured to move the movable surface 5 for directing articles from one conveying plane (P1, P2, P3) to another in phase relationship with the feeding conveyor 2, so as to allow feeding a single article at each feeding plane (P1, P2, P3). According to the above-mentioned aspect, preferably the drive and control unit 6 is also configured to control the movement of the movable surface 5 according to the following cyclic operating sequence: from the first conveying plane to the second conveying plane, from the second conveying plane to the third conveying plane, from the third conveying plane to the second conveying plane, from the second conveying plane to the first conveying plane.

According to the above-mentioned aspect, the drive unit 6 is configured to control the movement of the movable surface 5 in phase relationship with the feeding conveyor 2 according to the following cyclic operating sequence:
- from the first conveying plane to the second conveying plane to release an article onto the second conveying plane P2;
- from the second conveying plane to the third conveying plane to release a pair of articles onto the third conveying plane P3;
- from the third conveying plane to the second conveying plane to release an article onto the second conveying plane P2;
- from the second conveying plane to the first conveying plane to release a pair of articles onto the first conveying plane P1.

According to another aspect, a method is also defined for stacking articles, comprising the following steps:
- preparing a device 1 for stacking articles as described above;
- feeding articles A using the feeding conveyor 2, with each article A pushed along the first portion P1 of the conveying path P by a contact element (3A, 3B, 3C);
- positioning the movable surface 5 for directing articles in a first position of connecting the first transport surface 4 with the first conveying plane P1 to release at least one article A onto the first conveying plane P1 pushed by a first contact element;
- positioning the movable surface 5 for directing articles in a second position of connecting the first transport surface 4 with the second conveying plane P2 to release at least one article onto the second conveying plane P2 pushed by a further contact element;
- moving one from among the first and the further contact element from the contact position to the disengaged position.

According to a preferred operating method, which can be actuated with a device 1 equipped with two or more pick up planes, the step of positioning the movable surface 5 for directing articles in a first position of connecting the first transport surface 4 with the first conveying plane P1 to release at least one article onto the first conveying plane P1 comprises the following step:
- releasing a first article onto the first conveying plane P1, the article being pushed by a first contact element, and a second article pushed by a second contact element which follows the first contact element,
   and wherein the step of positioning the movable surface 5 for directing articles in a second position of connecting the first transport surface 4 with the second conveying plane P2 to release at least one article onto the second conveying plane P2 comprises the following step:
- releasing a third article onto the second conveying plane P2, the article being pushed by a third contact element which follows the second contact element, and a fourth article pushed by a fourth contact element which follows the third contact element, and further comprising the steps of moving the second and the fourth contact elements from the operating position to the disengaged position.

According to another aspect, the method further comprises the following steps:
- preparing a third conveying plane P3 positioned at a third height, which is different from and higher than the first height and second height;
- positioning the movable surface 5 for directing articles in a third position of connecting the first transport surface 4 with the third conveying plane P3 to release at least one article onto the third conveying plane P3;
- releasing at least one article onto the third conveying plane P3, the article being pushed by a contact element.

According to yet another aspect, the following steps are performed cyclically and in the following order:
- positioning the movable surface 5 for directing articles in a first position of connecting the first transport surface 4 with the first conveying plane P1;
- releasing a first article A onto the first conveying plane P1, the article being pushed by a first contact element;
- releasing a second article A onto the first conveying plane P1, the article being pushed by a second contact element (after the first in the conveying direction);
- positioning the movable surface 5 for directing articles in a second position of connecting the first transport surface 4 with the second conveying plane P2;
- releasing a third article A onto the second conveying plane P2, the article being pushed by a third contact element (after the first in the conveying direction);
- positioning the movable surface 5 for directing articles in a third position of connecting the first transport surface 4 with the third conveying plane P3;
   releasing a fourth article A onto the third conveying plane P3, the article being pushed by a fourth contact element (after the first in the conveying direction);
- releasing a fifth article A onto the third conveying plane P3, the article being pushed by a fifth contact element.
- positioning the movable surface 5 for directing articles in the second position of connecting the first transport surface 4 with the second conveying plane P2;
- releasing a sixth article A onto the second conveying plane P2, the article being pushed by a sixth contact element;
- positioning the movable surface 5 for directing articles in the first position of connecting the first transport surface 4 with the first conveying plane P1. According to this aspect, the method also comprises the following steps:
   - moving the first contact element from the operating position to the non-operating position,
   - moving the third contact element from the operating position to the non-operating position,
   - moving the fourth contact element from the operating position to the non-operating position,
   - moving the sixth contact element from the operating position to the non-operating position.

According to an alternative further aspect, the method comprises the following steps:
- moving the second contact element from the operating position to the non-operating position,
- moving the third contact element from the operating position to the non-operating position,
- moving the fifth contact element from the operating position to the non-operating position,
- moving the sixth contact element from the operating position to the non-operating position.

Figure 5 illustrated the above-mentioned operating sequence.

It should be noted that, advantageously, in this way - according to the sequence described immediately above - it is possible to make a stack of three articles even with particularly high product infeed flows.

In effect, it should be noted that the movable surface 5 moves from one position to another at a speed compatible with the operating requirements of the articles, thanks to the fact that the angular excursion at each movement of the surface 5 is particularly limited.

It should be noted that, in particular during the step of moving the movable surface 5 downwards, the accelerations and the speeds allow the article A to be kept firmly resting on the movable surface 5.

Advantageously, the device 1 described is particularly flexible: it allows stacking of two or more articles in a particularly efficient and safe manner even with high speeds.

The following should be noted with reference to the method of movement of the first portion of the contact elements from the operating position to the non-operating position.

The contact elements of the first portion can be configured to rotate about a point of rotation, from the operating position (vertical, with upper tip upwards) to the non-operating position (horizontal).

More specifically, it should be noted that the contact elements are connected to a transport element (which is part of the feeding conveyor 2) extending on a closed path.

Preferably, the transport element is a chain.

Preferably, the feeding conveyor 2 is equipped with guides, designed to support at least the first portion of the contact elements at the first portion of the conveying path (where there is the first transport surface 4).

It should be noted that the absence of guides at the second portion of the conveying path means that where there are conveying planes (P1, P2, P3) the transport elements of the first portion, which are no longer supported, are moved from the operating position to the non-operating position.

More specifically, as described, the transport elements of the first portion, which are no longer supported, rotate from the operating position to the non-operating position.

## Claims

1. A device (1) for stacking articles, **characterised in that** it comprises:
- a feeding conveyor (2) equipped with a plurality of contact elements (3A, 3B, 3C), each designed to make contact with a single article (A) in order to convey it along a conveying path (PC);
- a first transport surface (4), configured to support the articles (A) along a first portion (PC1) of the conveying path;
- a predetermined number of conveying planes (P1, P2, P3) for supporting the articles (A) along a second portion (PC2) of the conveying path which follows the first portion (PC1) of the conveying path, comprising at least:
- a first conveying plane (P1) positioned at a first height;
- a second conveying plane (P2) positioned at a second height, which is different from and higher than the first height;
- a movable surface (5) for directing articles (A), which is movable at least between a number of positions equal to the predetermined number of conveying planes (P1, P2, P3), to selectively and alternatively connect the first transport surface (4) with one of the conveying planes (P1, P2, P3), **characterized in that**, a first portion (3B, 3C) of the contact elements (3A, 3B, 3C) being movable between an operating position of making contact with and transporting the articles (A), and a non-operating position of disengagement from the articles (A) adopted at the second portion of the conveying path, and a second portion (3A) of the contact elements being configured to make contact with and push the articles (A) along the above-mentioned first and second portions (P1, P2) of the conveying path.

2. The device according to the preceding claim, wherein the second portion of the contact elements (3A, 3B, 3C) comprises contact elements spaced from each other by a number of contact elements (3A, 3B, 3C) equal to the predetermined number of conveying planes (P1, P2, P3).

3. The device according to the preceding claim, comprising a drive and control unit (6) and an actuator designed to move the movable surface (5) for directing articles (A) and connected to the drive and control unit (6) to be controlled by it, the drive and control unit (6) being configured to move the movable surface (5) for directing articles (A) from one conveying plane to another in phase relationship with the feeding conveyor (2), so as to allow feeding a pair of articles (A) at each feeding plane (P1, P2).

4. The device according to the preceding claim, wherein the conveying planes (P1, P2, P3) further comprise a third conveying plane (P3) positioned at a third height, which is different from and higher than the first height and second height, and wherein the movable surface (5) for directing articles (A) is movable at least between:
- a first connecting position, wherein it connects the first transport surface (4) to the first conveying plane (P1),
- a second connecting position, wherein it connects the first transport surface (4) to the second conveying plane (P2),
- a third connecting position, wherein it connects the first transport surface (4) to the third conveying plane (P3).

5. The device according to the preceding claim, comprising a drive and control unit (6) and an actuator designed to move the movable surface (5) for directing articles (A) and connected to the drive and control unit (6) to be controlled by it, the drive and control unit (6) being configured to move the movable surface (5) for directing articles from one conveying plane (P1, P2, P3) to another in phase relationship with the feeding conveyor (2), so as to allow feeding at least a single article at each feeding plane (P1, P2, P3), and also being configured to control the movement of the movable surface (5) according to the following cyclic operating sequence: from the first conveying plane to the second conveying plane, from the second conveying plane to the third conveying plane, from the third conveying plane to the second conveying plane, from the second conveying plane to the first conveying plane.

6. The device according to the preceding claim, wherein the drive unit (6) is configured to control the movement of the movable surface (5) in phase relationship with the feeding conveyor (2) according to the following cyclic operating sequence:
- from the first conveying plane to the second conveying plane to release an article onto the second conveying plane (P2);
- from the second conveying plane to the third conveying plane to release a pair of articles onto the third conveying plane (P3);
- from the third conveying plane to the second conveying plane to release an article onto the second conveying plane (P2);
- from the second conveying plane to the first conveying plane to release a pair of articles onto the first conveying plane (P1).

7. A method for stacking articles, **characterised in that** it comprises the following steps:
- preparing a device (1) for stacking articles according to any one of the preceding claims;
- feeding articles (A) using the feeding conveyor (2), with each article (A) pushed along the first portion (P1) of the conveying path (P) by a contact element (3A, 3B, 3C);
- positioning the movable surface (5) for directing articles in a first position of connecting the first transport surface (4) with the first conveying plane (P1) to release at least one article (A) onto the first conveying plane (P1) pushed by a first contact element;
- positioning the movable surface (5) for directing articles in a second position of connecting the first transport surface (4) with the second conveying plane (P2) to release at least one article onto the second conveying plane (P2) pushed by a further contact element;
- moving one from among the first and the further contact element from the contact position to the disengaged position.

8. The method according to the preceding claim, wherein the step of positioning the movable surface (5) for directing articles in a first position of connecting the first transport surface (4) with the first conveying plane (P1) to release at least one article onto the first conveying plane (P1) comprises the following step:
- releasing a first article onto the first conveying plane (P1), the article being pushed by a first contact element, and a second article pushed by a second contact element which follows the first contact element,
and wherein the step of positioning the movable surface (5) for directing articles in a second position of connecting the first transport surface (4) with the second conveying plane (P2) to release at least one article onto the second conveying plane (P2) comprises the following step:
- releasing a third article onto the second conveying plane (P2), the article being pushed by a third contact element which follows the second contact element, and a fourth article pushed by a fourth contact element which follows the third contact element, and further comprising the steps of moving the second and the fourth contact elements from the operating position to the disengaged position.

9. The method according to claim 7, further comprising the following steps:
- preparing a third conveying plane (P3) positioned at a third height, which is different from and higher than the first height and second height;
- positioning the movable surface (5) for directing articles in a third position of connecting the first transport surface (4) with the third conveying plane (P3) to release at least one article onto the third conveying plane (P3);
- releasing at least one article onto the third conveying plane (P3), the article being pushed by a contact element.

10. The method according to the preceding claim, wherein the following steps are performed cyclically and in the following order:
- positioning the movable surface (5) for directing articles in a first position of connecting the first transport surface (4) with the first conveying plane (P1);
- releasing a first article (A) onto the first conveying plane (P1), the article being pushed by a first contact element;
- releasing a second article (A) onto the first conveying plane (P1), the article being pushed by a second contact element;
- positioning the movable surface (5) for directing articles in a second position of connecting the first transport surface (4) with the second conveying plane (P2);
- releasing a third article (A) onto the second conveying plane (P2), the article being pushed by a third contact element;
- positioning the movable surface (5) for directing articles in a third position of connecting the first transport surface (4) with the third conveying plane (P3);
- releasing a fourth article (A) onto the third conveying plane (P3), the article being pushed by a fourth contact element;
- releasing a fifth article (A) onto the third conveying plane (P3), the article being pushed by a fifth contact element.
- positioning the movable surface (5) for directing articles in the second position of connecting the first transport surface (4) with the second conveying plane (P2);
- releasing a sixth article (A) onto the second conveying plane (P2), the article being pushed by a sixth contact element;
- positioning the movable surface (5) for directing articles in the first position of connecting the first transport surface (4) with the first conveying plane (P1),
and wherein the method also comprises the following steps:
- moving the first contact element from the operating position to the non-operating position,
- moving the third contact element from the operating position to the non-operating position,
- moving the fourth contact element from the operating position to the non-operating position,
- moving the sixth contact element from the operating position to the non-operating position.

## Patentansprüche

1. Vorrichtung (1) zur Stapelung von Artikeln, **dadurch gekennzeichnet, dass** sie Folgendes umfasst:
- einen Zuführungsförderer (2), der mit einer Vielzahl von Kontaktelementen (3A, 3B, 3C) ausgestattet ist, die jeweils ausgestaltet sind, um den Kontakt mit einem einzelnen Artikel (A) herzustellen, um diesen entlang eines Förderwegs (PC) zu fördern;
- eine erste Transportoberfläche (4), die ausgelegt ist, um die Artikel (A) entlang eines ersten Abschnitts (PC1) des Förderwegs zu stützen;
- eine vorgegebene Zahl an Förderebenen (P1, P2, P3) zum Stützen der Artikel (A) entlang eines zweiten Abschnitts (PC2) des Förderwegs, der dem ersten Abschnitt (PC1) des Förderwegs folgt, umfassend mindestens
- eine erste Förderebene (P1), die an einer ersten Höhe positioniert ist;
- eine zweite Förderebene (P2), die auf einer zweiten Höhe positioniert ist, die sich von der ersten Höhe unterscheidet und höher ist;
- eine bewegliche Oberfläche (5) zum Lenken von Artikeln (A), die mindestens zwischen einer Zahl an Positionen gleich der vorgegebenen Zahl an Förderebenen (P1, P2, P3) bewegbar ist, um die erste Transportoberfläche (4) selektiv und wechselweise mit einer der Förderebenen (P1, P2, P3) zu verbinden, **dadurch gekennzeichnet, dass** ein erster Abschnitt (3B, 3C) der Kontaktelemente (3A, 3B, 3C) zwischen einer Betriebsposition, in der Kontakt mit den Artikeln (A) hergestellt wird und diese transportiert werden, und einer Nichtbetriebsposition der Loslösung von den Artikeln (A), die am zweiten Abschnitt des Förderwegs eingenommen wird, bewegbar ist, und ein zweiter Abschnitt (3A) der Kontaktelemente ausgelegt ist, um Kontakt mit den Artikeln (A) herzustellen und diese entlang des ersten und zweiten Abschnitts (P1, P2) des Förderwegs vorzuschieben.

2. Vorrichtung nach dem vorhergehenden Anspruch, wobei der zweite Abschnitt der Kontaktelemente (3A, 3B, 3C) Kontaktelemente umfasst, die voneinander durch eine Zahl an Kontaktelementen (3A, 3B, 3C) gleich der vorgegebenen Zahl an Förderebenen (P1, P2, P3) beabstandet sind.

3. Vorrichtung nach dem vorhergehenden Anspruch, umfassend eine Antriebs- und Steuereinheit (6) und einen Steller, ausgelegt, um die bewegbare Oberfläche (5) zum Lenken von Artikeln (A) zu bewegen und verbunden mit der Antriebs- und Steuereinheit (6), um von dieser gesteuert zu werden, wobei die Antriebs- und Steuereinheit (6) ausgelegt ist, um die bewegbare Oberfläche (5) zu bewegen, um Artikel (A) von einer Förderebene zu einer anderen in einem Phasenverhältnis mit dem Zuführungsförderer (2) zu lenken, sodass die Zuführung eines Paars von Artikeln (A) an jeder Zuführungsebene (P1, P2) ermöglicht wird.

4. Vorrichtung nach dem vorhergehenden Anspruch, wobei die Förderebenen (P1, P2, P3) zudem eine dritte Förderebene (P3) umfassen, die an einer dritten Höhe positioniert ist, die unterschiedlich von der ersten und der zweiten Höhe und höher als diese ist, wobei die bewegbare Oberfläche (5) zum Lenken von Artikeln (A) mindestens bewegbar ist zwischen:
- einer ersten Verbindungsposition, in der sie die erste Transportoberfläche (4) mit der ersten Förderebene (P1) verbindet;
- einer zweiten Verbindungsposition, in der sie die erste Transportoberfläche (4) mit der zweiten Förderebene (P2) verbindet;
- einer dritten Verbindungsposition, in der sie die erste Transportoberfläche (4) mit der dritten Förderebene (P3) verbindet.

5. Vorrichtung nach dem vorhergehenden Anspruch, umfassend eine Antriebs- und Steuereinheit (6) und einen Steller, ausgelegt, um die bewegbare Oberfläche (5) zum Lenken von Artikeln (A) zu bewegen und verbunden mit der Antriebs- und Steuereinheit (6), um von dieser gesteuert zu werden, wobei die Antriebs- und Steuereinheit (6) ausgelegt ist, um die bewegbare Oberfläche (5) zu bewegen, um Artikel (A) von einer Förderebene (P1, P2, P3) zu einer anderen in einem Phasenverhältnis mit dem Zuführungsförderer (2) zu lenken, sodass mindestens ein einzelner Artikel an jeder Zuführungsebene (P1, P2, P3) zugeführt wird, und auch ausgelegt, um die Bewegung der bewegbaren Oberfläche (5) nach dem folgenden zyklischen Betriebsablauf zu steuern: von der ersten Förderebene zur zweiten Förderebene, von der zweiten Förderebene zur dritten Förderebene, von der dritten Förderebene zur zweiten Förderebene, von der zweiten Förderebene zur ersten Förderebene.

6. Vorrichtung nach dem vorhergehenden Anspruch, wobei die Antriebseinheit (6) ausgelegt ist, um die Bewegung der bewegbaren Oberfläche (5) in einem Phasenverhältnis mit dem Zuführungsförderer (2) nach dem folgenden zyklischen Betriebsablauf zu steuern:
- von der ersten Förderebene zur zweiten Förderebene, um einen Artikel auf der zweiten Förderebene (P2) freizugeben;
- von der zweiten Förderebene zur dritten Förderebene, um ein Paar von Artikeln auf der dritten Förderebene (P3) freizugeben;
- von der dritten Förderebene zur zweiten Förderebene, um einen Artikel auf der zweiten Förderebene (P2) freizugeben;
- von der zweiten Förderebene zur ersten Förderebene, um ein Paar von Artikeln auf der ersten Förderebene (P1) freizugeben.

7. Verfahren zur Stapelung von Artikeln, **dadurch gekennzeichnet, dass** es die folgenden Schritte umfasst:
- Vorbereiten einer Vorrichtung (1) zur Stapelung von Artikeln nach einem der vorhergehenden Ansprüche;
- Zuführen von Artikeln (A) unter Nutzung des Zuführungsförderers (2), wobei ein jeder Artikel (A) entlang des ersten Abschnitts (P1) des Förderwegs (P) durch ein Kontaktelement (3A, 3B, 3C) vorgeschoben wird;
- Positionieren der bewegbaren Oberfläche (5), um Artikel in eine erste Position der Verbindung der ersten Transportoberfläche (4) mit der ersten Förderebene (P1) zu lenken, um mindestens einen Artikel (A) auf der ersten Förderebene (P1), geschoben von einem ersten Kontaktelement, freizugeben;
- Positionieren der bewegbaren Oberfläche (5), um Artikel in eine zweite Position der Verbindung der ersten Transportoberfläche (4) mit der zweiten Förderebene (P2) zu lenken, um mindestens einen Artikel (A) auf der zweiten Förderebene (P2), geschoben von einem weiteren Kontaktelement, freizugeben;
- Bewegen entweder des ersten oder des weiteren Kontaktelements von der Kontaktposition in die losgelöste Position.

8. Verfahren nach dem vorhergehenden Anspruch, wobei der Schritt zum Positionieren der bewegbaren Oberfläche (5), um Artikel in eine erste Position der Verbindung der ersten Transportoberfläche (4) mit der ersten Förderebene (P1) zu lenken, um mindestens einen Artikel (A) auf der ersten Förderebene (P1) freizugeben, den folgenden Schritt umfasst:
- Freigeben eines ersten Artikels auf der ersten Förderebene (P1), wobei der Artikel von einem ersten Kontaktelement geschoben wird, und ein zweiter Artikel von einem zweiten Kontaktelement geschoben wird, das dem ersten Kontaktelement folgt,
wobei der Schritt zum Positionieren der bewegbaren Oberfläche (5), um Artikel in eine zweite Position der Verbindung der ersten Transportoberfläche (4) mit der zweiten Förderebene (P2) zu lenken, um mindestens einen Artikel (A) auf der zweiten Förderebene (P2) freizugeben, den folgenden Schritt umfasst:
- Freigeben eines dritten Artikels auf der zweiten Förderebene (P2), wobei der Artikel von einem dritten Kontaktelement geschoben wird, das dem zweiten Kontaktelement folgt, und ein vierter Artikel von einem vierten Kontaktelement geschoben wird, das dem dritten Kontaktelement folgt, und zudem umfassend die Schritte zum Bewegen des ersten und vierten Kontaktelements aus der Betriebsposition in die losgelöste Position.

9. Verfahren nach Anspruch 7, zudem umfassend die folgenden Schritte:
- Vorbereiten einer dritten Förderebene (P3), positioniert an einer dritten Höhe, die anders und höher ist als die erste Höhe und die zweite Höhe;
- Positionieren der bewegbaren Oberfläche (5), um Artikel in eine dritte Position der Verbindung der ersten Transportoberfläche (4) mit der dritten Förderebene (P3) zu lenken, um mindestens einen Artikel (A) auf der dritten Förderebene (P3) freizugeben;
- Freigeben von mindestens einem Artikel auf der dritten Förderebene (P3), wobei der Artikel von einem Kontaktelement geschoben wird.

10. Verfahren nach dem vorhergehenden Anspruch, wobei die folgenden Schritte zyklisch und in folgender Reihenfolge ausgeführt werden:
- Positionieren der bewegbaren Oberfläche (5), um Artikel in eine erste Position der Verbindung der ersten Transportoberfläche (4) mit der ersten Förderebene (P1) zu lenken;
- Freigeben eines ersten Artikels (A) auf der ersten Förderebene (P1), wobei der Artikel von einem ersten Kontaktelement geschoben wird;
- Freigeben eines zweiten Artikels (A) auf der ersten Förderebene (P1), wobei der Artikel von einem zweiten Kontaktelement geschoben wird;
- Positionieren der bewegbaren Oberfläche (5), um Artikel in eine zweite Position der Verbindung der ersten Transportoberfläche (4) mit der zweiten Förderebene (P2) zu lenken;
- Freigeben eines dritten Artikels (A) auf der zweiten Förderebene (P2), wobei der Artikel von einem dritten Kontaktelement geschoben wird;
- Positionieren der bewegbaren Oberfläche (5), um Artikel in eine dritte Position der Verbindung der ersten Transportoberfläche (4) mit der dritten Förderebene (P3) zu lenken;
- Freigeben eines vierten Artikels (A) auf der dritten Förderebene (P3), wobei der Artikel von einem vierten Kontaktelement geschoben wird;
- Freigeben eines fünften Artikels (A) auf der dritten Förderebene (P3), wobei der Artikel von einem fünften Kontaktelement geschoben wird;
- Positionieren der bewegbaren Oberfläche (5), um Artikel in die zweite Position der Verbindung der ersten Transportoberfläche (4) mit der zweiten Förderebene (P2) zu lenken;
- Freigeben eines sechsten Artikels (A) auf der zweiten Förderebene (P2), wobei der Artikel von einem sechsten Kontaktelement geschoben wird;
- Positionieren der bewegbaren Oberfläche (5), um Artikel in die erste Position der Verbindung der ersten Transportoberfläche (4) mit der ersten Förderebene (P1) zu lenken, wobei das Verfahren zudem die folgenden Schritte umfasst:
Bewegen des ersten Kontaktelements von der Betriebsposition in die Nichtbetriebsposition;
Bewegen des dritten Kontaktelements von der Betriebsposition in die Nichtbetriebsposition;
Bewegen des vierten Kontaktelements von der Betriebsposition in die Nichtbetriebsposition;
Bewegen des sechsten Kontaktelements von der Betriebsposition in die Nichtbetriebsposition.

## Revendications

1. Dispositif (1) pour empiler des articles, **caractérisé en ce qu'**il comprend :
- un convoyeur d'alimentation (2) équipé d'une pluralité d'éléments de contact (3A, 3B, 3C), chacun conçu pour se mettre en contact avec un article individuel (A) afin de l'acheminer le long d'un parcours de convoyage (PC) ;
- une première surface de transport (4) configurée pour supporter les articles (A) le long d'une première partie (PC1) du parcours de convoyage ;
- un nombre prédéterminé de plans de convoyage (P1, P2, P3) pour supporter les articles (A) le long d'une seconde partie (PC2) du parcours de convoyage qui suit la première partie (PC1) du parcours de convoyage, comprenant au moins :
- un premier plan de convoyage (P1) positionné à une première hauteur ;
- un second plan de convoyage (P2) positionné à une seconde hauteur étant différente et plus haute que la première hauteur ;
- une surface mobile (5), pour orienter les articles (A), étant mobile au moins entre un nombre de positions égal au nombre prédéterminé de plans de convoyage (P1, P2, P3), pour sélectivement et alternativement relier la première surface de transport (4) avec un des plans de convoyage (P1, P2, P3), **caractérisé en ce que**, une première partie (3B, 3C) des éléments de contact (3A, 3B, 3C) étant mobile entre une position fonctionnelle de mise en contact et de transport des articles (A), et une position non fonctionnelle de désengagement des articles (A) adoptée en correspondance de la seconde partie du parcours de convoyage, et une seconde partie (3A) des éléments de contact étant configurée pour se mettre en contact avec et pousser les articles (A) le long des première et seconde parties susmentionnées (P1, P2) du parcours de convoyage.

2. Dispositif selon la revendication précédente, dans lequel la seconde partie des éléments de contact (3A, 3B, 3C) comprend des éléments de contact espacés les uns des autres par un nombre d'éléments de contact (3A, 3B, 3C) égal au nombre prédéterminé de plans de convoyage (P1, P2, P3).

3. Dispositif selon la revendication précédente, comprenant une unité d'entraînement et de commande (6) et un actionneur conçu pour déplacer la surface mobile (5) pour diriger les articles (A) et relié à l'unité d'entraînement et de commande (6) pour être commandé par celle-ci, l'unité d'entraînement et de commande (6) étant configurée pour déplacer la surface mobile (5) pour diriger les articles (A) d'un plan de convoyage à un autre en relation de phase avec le convoyeur d'alimentation (2), de sorte à permettre l'alimentation d'une paire d'articles (A) à chaque plan d'alimentation (P1, P2).

4. Dispositif selon la revendication précédente, dans lequel les plans de convoyage (P1, P2, P3) comprennent de plus un troisième plan de convoyage (P3) positionné à une troisième hauteur, étant différente de et plus grande que la première hauteur et la seconde hauteur, et dans lequel la surface mobile (5) pour diriger les articles (A) est mobile au moins entre :
- une première position de raccordement, dans laquelle elle raccorde la première surface de transport (4) au premier plan de convoyage (P1),
- une seconde position de raccordement, dans laquelle elle raccorde la première surface de transport (4) au second plan de convoyage (P2),
- une troisième position de raccordement, dans laquelle elle raccorde la première surface de transport (4) au troisième plan de convoyage (P3).

5. Dispositif selon la revendication précédente, comprenant une unité d'entraînement et de commande (6) et un actionneur conçu pour déplacer la surface mobile (5) pour diriger des articles (A) et relié à l'unité d'entraînement et de commande (6) pour être commandé par celle-ci, l'unité d'entraînement et de commande (6) étant configurée pour déplacer la surface mobile (5) pour diriger des articles d'un plan de convoyage (P1, P2, P3) à un autre en relation de phase avec le convoyeur d'alimentation (2), de sorte à permettre l'alimentation d'au moins un article individuel à chaque plan d'alimentation (P1, P2, P3), et étant aussi configurée pour commander le déplacement de la surface mobile (5) selon la séquence fonctionnelle cyclique suivante : du premier plan de convoyage au second plan de convoyage, du second plan de convoyage au troisième plan de convoyage, du troisième plan de convoyage au second plan de convoyage et du second plan de convoyage au premier plan de convoyage.

6. Dispositif selon la revendication précédente, dans lequel l'unité d'entraînement (6) est configurée pour commander le déplacement de la surface mobile (5) en relation de phase avec le convoyeur d'alimentation (2) selon la séquence fonctionnelle cyclique suivante :
- du premier plan de convoyage au second plan de convoyage pour libérer un article sur le second plan de convoyage (P2) ;
- du second plan de convoyage au troisième plan de convoyage pour libérer une paire d'articles sur le troisième plan de convoyage (P3) ;
- du troisième plan de convoyage au second plan de convoyage pour libérer un article sur le second plan de convoyage (P2) ;
- du second plan de convoyage au premier plan de convoyage pour libérer une paire d'articles sur le premier plan de convoyage (P1).

7. Procédé pour empiler des articles, **caractérisé en ce qu'**il comprend les étapes suivantes :
- préparer un dispositif (1) pour empiler des articles selon l'une quelconque des revendications précédentes ;
- alimenter des articles (A) en utilisant le convoyeur d'alimentation (2) avec chaque article (A) poussé, le long de la première partie (P1) du parcours de convoyage (P), par un élément de contact (3A, 3B, 3C) ;
- positionner la surface mobile (5) pour diriger les articles dans une première position de raccordement de la première surface de transport (4) avec le premier plan de convoyage (P1) pour libérer au moins un article (A) sur le premier plan de convoyage (P1) poussé par un premier élément de contact ;
- positionner la surface mobile (5) pour diriger les articles dans une seconde position de raccordement de la première surface de transport (4) avec le second plan de convoyage (P2) pour libérer au moins un article sur le second plan de convoyage (P2) poussé par un élément de contact supplémentaire ;
- déplacer l'un d'entre le premier et l'élément de contact supplémentaire de la position de contact à la position désengagée.

8. Procédé selon la revendication précédente, dans lequel l'étape consistant à positionner la surface mobile (5) pour diriger des articles dans une première position de raccordement de la première surface de transport (4) avec le premier plan de convoyage (P1) pour libérer au moins un article sur le premier plan de convoyage (P1) comprend l'étape suivante :
- libérer un premier article sur le premier plan de convoyage (P1), l'article étant poussé par un premier élément de contact, et un second article poussé par un second élément de contact qui suit le premier élément de contact,
et dans lequel l'étape consistant à positionner la surface mobile (5) pour diriger des articles dans une seconde position de raccordement de la première surface de transport (4) avec le second plan de convoyage (P2) pour libérer au moins un article sur le second plan de convoyage (P2) comprend l'étape suivante :
- libérer un troisième article sur le second plan de convoyage (P2), l'article étant poussé par un troisième élément de contact qui suit le second élément de contact, et un quatrième article poussé par un quatrième élément de contact qui suit le troisième élément de contact, et comprenant de plus les étapes consistant à déplacer les second et quatrième éléments de contact de la position de fonctionnement à la position désengagée.

9. Procédé selon la revendication 7, comprenant de plus les étapes suivantes :
- préparer un troisième plan de convoyage (P3) positionné à une troisième hauteur étant différente et plus haute que la première hauteur et la seconde hauteur ;
- positionner la surface mobile (5) pour diriger des articles dans une troisième position de raccordement de la première surface de transport (4) avec le troisième plan de convoyage (P3) pour libérer au moins un article sur le troisième plan de convoyage (P3) ;
- libérer au moins un article sur le troisième plan de convoyage (P3), l'article étant poussé par un élément de contact .

10. Procédé selon la revendication précédente, dans lequel les étapes suivantes sont effectuées cycliquement et dans l'ordre suivant :
- positionner la surface mobile (5) pour diriger des articles dans une première position de raccordement de la première surface de transport (4) avec le premier plan de convoyage (P1) ;
- libérer un premier article (A) sur le premier plan de convoyage (P1), l'article étant poussé par un premier élément de contact ;
- libérer un second article (A) sur le premier plan de convoyage (P1), l'article étant poussé par un second élément de contact ;
- positionner la surface mobile (5) pour diriger des articles dans une seconde position de raccordement de la première surface de transport (4) avec le second plan de convoyage (P2) ;
- libérer un troisième article (A) sur le second plan de convoyage (P2), l'article étant poussé par un troisième élément de contact ;
- positionner la surface mobile (5) pour diriger des articles dans une troisième position de raccordement de la première surface de transport (4) avec le troisième plan de convoyage (P3) ;
- libérer un quatrième article (A) sur le troisième plan de convoyage (P3), l'article étant poussé par un quatrième élément de contact ;
- libérer un cinquième article (A) sur le troisième plan de convoyage (P3), l'article étant poussé par un cinquième élément de contact,
- positionner la surface mobile (5) pour diriger des articles dans la seconde position de raccordement de la première surface de transport (4) avec le second plan de convoyage (P2) ;
- libérer un sixième article (A) sur le second plan de convoyage (P2), l'article étant poussé par un sixième élément de contact ;
- positionner la surface mobile (5) pour diriger des articles dans la première position de raccordement de la première surface de transport (4) avec le premier plan de convoyage (P1), et dans lequel le procédé comprend également les étapes suivantes :
- déplacer le premier élément de contact de la position fonctionnelle à la position non fonctionnelle,
- déplacer le troisième élément de contact de la position fonctionnelle à la position non fonctionnelle,
- déplacer le quatrième élément de contact de la position fonctionnelle à la position non fonctionnelle,
- déplacer le sixième élément de contact de la position fonctionnelle à la position non fonctionnelle.
